# FASCICULE DE BREVET EUROPEEN

(11) **EP 1 577 128 B1**
(45) Date de publication et mention de la délivrance du brevet: **30.07.2008**
(21) Numéro de dépôt: 05290603.9
(22) Date de dépôt: 18.03.2005
(51) Int. Cl.: B60G 21/055

(54) **Baque d'arrêt pour barre stabilisatrice d'une suspension de véhicule automobile et procédé de montage**
Haltering für einen Stabilisator einer Fahrzeugfederung und dessen Montagemethode
Locking collar and mounting method for a stabiliser bar of a vehicle suspension

(30) Priorité: 19.03.2004 FR 0402845
(43) Date de publication de la demande: 21.09.2005
(73) Titulaire: ALLEVARD REJNA AUTOSUSPENSIONS, 92210 Saint-Cloud (FR)
(72) Inventeur: Lecoester, François, 59500 Douai (FR)
(74) Mandataire: Barbin le Bourhis, Joël

(56) Documents cités:
- EP-A- 0 405 109
- WO-A-99/54157
- FR-A- 2 657 564

## Description

L'invention concerne une bague d'arrêt destinée à être montée sur une barre stabilisatrice cylindrique coudée, entrant dans la constitution d'une suspension de véhicule automobile. Elle concerne aussi une barre stabilisatrice munie de telles bagues d'arrêt. Elle concerne enfin un procédé de fabrication d'une barre stabilisatrice incluant la fixation de ces bagues.

Une telle bague d'arrêt et une telle barre stabilisatrice sont connues du document FR 2 657 564 qui forme l'état de la technique le plus proche selon le préambule de la revendication 1.

Une barre stabilisatrice doit comporter des moyens permettant de la stabiliser transversalement à la direction longitudinale du véhicule. Cette fonction dite "anti-cheminement" peut être assurée de différentes façons, par exemple avec des bagues, colliers ou cavaliers fixés à la barre.

Notamment, on connaît une bague comprenant un simple anneau plein d'environ 5 mm d'épaisseur, enfilée sur la barre avant d'être sertie sur celle-ci. Sa tenue à l'arrachement dépend du jeu initial existant avant sertissage entre la barre et la surface intérieure de l'anneau. Une valeur optimale de jeu se situe entre 1 et 3/10^{ème} de millimètre. Avec un faible jeu de cet ordre, on atteint une force d'arrachement très élevée, supérieure à 400 daN, pour un prix de revient très modique. La force d'arrachement se définit comme étant l'effort qu'il faut fournir pour amorcer le glissement de la bague sur la barre, après sertissage.

Cependant, les procédés de fabrication d'une barre stabilisatrice impliquent de mettre en forme ladite barre, c'est-à-dire notamment de la couder, avant d'engager les bagues sur la barre afin de les fixer par sertissage à des emplacements prédéterminés de celle-ci. En effet, la barre doit être soumise à une opération de trempe après cintrage : c'est la raison pour laquelle la bague n'est pas enfilée sur la barre avant cintrage, celle-ci étant portée à une température supérieure à 850°C. Or, le coudage de la barre entraîne une certaine ovalisation, particulièrement si ladite barre est tubulaire. On peut être dans l'impossibilité d'engager les bagues après conformation de la barre, notamment si on cherche à respecter le jeu optimal indiqué ci-dessus. On est alors amené à augmenter ce jeu au détriment de la qualité du sertissage, la force d'arrachement étant notablement réduite.

L'invention permet de surmonter cet inconvénient en proposant une modification de la bague, augmentant sa déformabilité au sertissage et permettant, sans inconvénient, d'augmenter le jeu initial défini ci-dessus. Plus particulièrement, l'invention concerne une bague d'arrêt à sertir sur une barre stabilisatrice cylindrique coudée pour suspension de véhicule automobile, caractérisée en ce qu'elle comporte un anneau fermé de diamètre intérieur sensiblement supérieur au diamètre de la barre sur laquelle elle est destinée à être montée et en ce que ledit anneau comporte au moins une encoche intérieure et au moins une encoche extérieure.

Selon un mode de réalisation préféré, la surface intérieure de l'anneau est cylindrique, en dehors de la ou les zones d'encoche. De préférence, il aura une section radiale rectangulaire constante en dehors de ces zones d'encoche.

Selon un mode de réalisation préféré, on prévoit deux encoches intérieures à la face intérieure de l'anneau et deux encoches extérieures à la face extérieure de l'anneau. Les encoches extérieures et intérieures peuvent être diamétralement opposées, respectivement. Les encoches extérieures et intérieures peuvent être décalées de 90°, circonférentiellement.

Une telle encoche a une profondeur radiale comprise entre 1/3 et 2/3 de l'épaisseur de l'anneau. De préférence, la profondeur de l'encoche s'étend sur environ la moitié de l'épaisseur de l'anneau.

Une telle encoche a un profil radial sensiblement triangulaire. Le fond de l'encoche présente de préférence un congé.

Selon un autre mode de réalisation, les encoches intérieures sont plus petites que les encoches extérieures. Elles sont aussi en plus grand nombre.

Par exemple, la profondeur radiale d'une encoche intérieure (distance entre l'enveloppe intérieure de la bague et le fond du congé) sera de l'ordre de 0,5 mm ou moins.

L'invention est particulièrement indiquée lorsque les bagues doivent être serties sur des portions tubulaires de la barre stabilisatrice, notamment si une telle barre est entièrement tubulaire.

L'invention concerne encore un procédé de fabrication d'une barre stabilisatrice comprenant l'opération consistant à couder une barre cylindrique pour lui donner une forme voulue, caractérisé en ce que, après avoir coudé ladite barre, on engage sur la barre une bague d'arrêt conforme à la définition qui précède et en ce qu'on sertit cette bague à un emplacement choisi sur une portion cylindrique de ladite barre.

Un outillage adapté à un tel sertissage comprend deux mâchoires comportant chacune une empreinte comprenant une zone d'appui semi-cylindrique de rayon faiblement supérieur au rayon extérieur de la barre et une gorge de forme correspondant à celle de ladite bague, creusée dans cette zone d'appui. Chaque gorge est conformée et dimensionnée pour provoquer un rétrécissement radial de l'anneau absorbant le jeu relativement important et assurant un sertissage efficace. Les mâchoires sont serrées jusqu'à déformation permanente de la bague. On obtient une force d'arrachement importante malgré un jeu initial plus grand que dans la technique antérieure permettant d'engager facilement la bague sur une barre cylindrique déjà coudée.

L'invention sera mieux comprise et d'autres avantages de celle-ci apparaîtront plus clairement à la lumière de la description qui va suivre d'une bague d'arrêt conforme à son principe et du procédé de montage de celle-ci sur une barre stabilisatrice coudée, donnée uniquement à titre d'exemple et faite en référence aux dessins annexés, dans lesquels :
- la figure 1 est une vue en perspective d'une bague d'arrêt conforme à l'invention ;
- la figure 2 montre plus particulièrement une telle bague engagée sur une barre stabilisatrice tubulaire coudée sur le point d'être placée au poste de sertissage ;
- la figure 3 est une vue en coupe III-III de la figure 2 ;
- la figure 4 est une vue analogue à la figure 3 montrant les deux mâchoires du dispositif de sertissage enserrant la bague au cours de l'opération de sertissage ;
- la figure 5 est une vue en plan d'une variante de la bague d'arrêt.

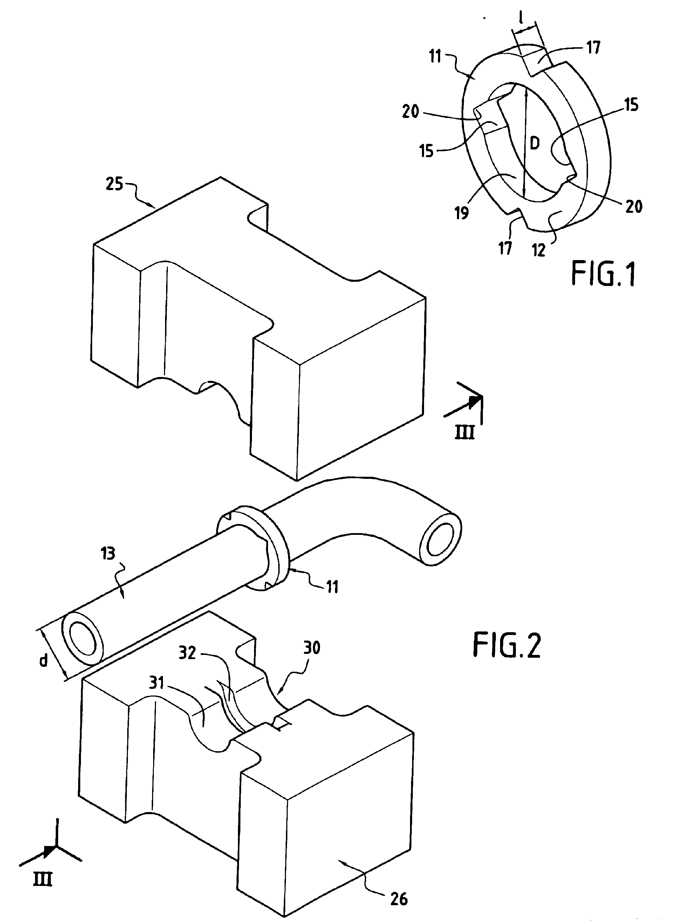

La bague d'arrêt 11 représentée sur la figure 1 comporte un anneau fermé 12 de diamètre intérieur D sensiblement supérieur au diamètre extérieur d'une barre cylindrique 13 sur laquelle elle est destinée à être montée. Dans l'exemple, la bague d'arrêt se résume à l'anneau lui-même. Selon une caractéristique importante de l'invention, l'anneau comporte au moins une encoche intérieure 15 et au moins une encoche extérieure 17. Il comporte en outre une surface intérieure 19 sensiblement cylindrique en dehors des zones d'encoche. Dans l'exemple, l'anneau a une section radiale rectangulaire constante en dehors de ces zones d'encoche. Comme représenté, chaque encoche 15, 17 s'étend sur toute la dimension longitudinale l de la bague. En outre, l'anneau comporte deux encoches intérieures 15 et deux encoches extérieures 17. Les deux encoches extérieures et les deux encoches intérieures sont diamétralement opposées, respectivement. Avantageusement, les encoches extérieures et intérieures sont décalées de 90°, circonférentiellement. Dans l'exemple de la figure 1, chaque encoche a une profondeur d'environ la moitié de l'épaisseur de l'anneau. Plus généralement, chaque encoche pourra avoir une profondeur radiale comprise entre 1/3 et 2/3 de l'épaisseur de l'anneau, environ.

Chaque encoche a un profil radial sensiblement triangulaire. De ce fait, comme chaque encoche s'étend sur toute la dimension longitudinale de la bague, une telle encoche comporte deux faces planes définissant sensiblement entre elles un dièdre, en l'occurrence ici un dièdre droit. Le fond de l'encoche présente néanmoins un congé 20 de faible rayon de courbure.

La figure 2 illustre un tronçon de la barre stabilisatrice 13, cylindrique et tubulaire, déjà coudée et sur laquelle on s'apprête à sertir une bague d'arrêt 11 conforme à la figure 1 , à l'aide d'un outil à sertir constitué par deux mâchoires 25, 26 qui seront décrites plus en détail ci-après. Classiquement, une telle barre stabilisatrice coudée comporte deux bagues d'arrêt de ce genre, immobilisées à des emplacements choisis, ici par le sertissage conforme à l'invention.

Il n'est habituellement pas envisageable d'engager la bague sur la barre avant la formation du coude car la barre subit une opération de trempe après cintrage. Or, l'opération de coudage peut empêcher la mise en place de la bague.

Au moment du coudage d'une barre et notamment une barre tubulaire, on peut observer une déformation au coude et notamment l'apparition d'une corde maximale de longueur supérieure au diamètre de la barre avant cintrage. Pour un type de barre donnée, en fonction du diamètre et du matériau utilisé, la valeur de cette corde maximale est pratiquement constante. Par conséquent, au moment des réglages, on peut la mesurer relativement précisément, ce qui permet de déterminer en conséquence le diamètre intérieur de l'anneau.

Lorsqu'on définit comme ci-dessus que le diamètre intérieur de l'anneau est "sensiblement supérieur au diamètre de la barre sur lequel il est destiné à être monté", on veut dire essentiellement que ce diamètre est déterminé en tenant compte, voire en fonction de cette valeur de corde maximale, pour que l'on soit certain de pouvoir faire passer la bague au-delà du coude jusqu'à son emplacement de sertissage. Dès lors que le diamètre intérieur de l'anneau est plus grand (d'au moins un jeu fonctionnel prédéterminé) que la longueur de ladite corde maximale, on peut considérer que l'une des conditions de mise en oeuvre de l'invention est réalisée. On a déterminé que le jeu fonctionnel optimal devait être voisin de 2/10^{ème} de millimètre, pour des diamètres de barre généralement compris entre 10 et 30 mm. Pour une telle valeur de jeu fonctionnel (au-delà de la valeur de la corde maximale) on peut estimer que les conditions de montage de la bague sont optimales, c'est-à-dire qu'on pourra à coup sûr faire passer la bague sur la barre jusqu'à l'emplacement de sertissage et que ce sertissage sera lui aussi optimisé, avec le dispositif de sertissage décrit plus loin.

Plus précisément, on peut estimer que la distance de plus grande corde, au coude, est comprise entre 1,01 d et 1,05 d, d étant le diamètre extérieur de la barre. En ajoutant le jeu fonctionnel défini ci-dessus, on aboutit à choisir le diamètre intérieur de l'anneau entre 1,01 d + 0,2 mm et 1,05 d + 0,2 mm, d est ici exprimé en mm.

On peut néanmoins prévoir un jeu global quelque peu arbitraire entre le diamètre extérieur de la barre et le diamètre intérieur de l'anneau, par exemple de l'ordre de 1 mm. Le sertissage n'est plus optimisé comme dans le cas précédent mais la force d'arrachement reste acceptable en raison de la forme même de l'anneau, susceptible de se déformer de façon plus importante, au moment du sertissage, toutes choses égales par ailleurs.

Plus globalement, le diamètre intérieur de l'anneau pourra être de 8 à 15 % supérieur au diamètre extérieur nominal de la barre sur laquelle il est destiné à être serti.

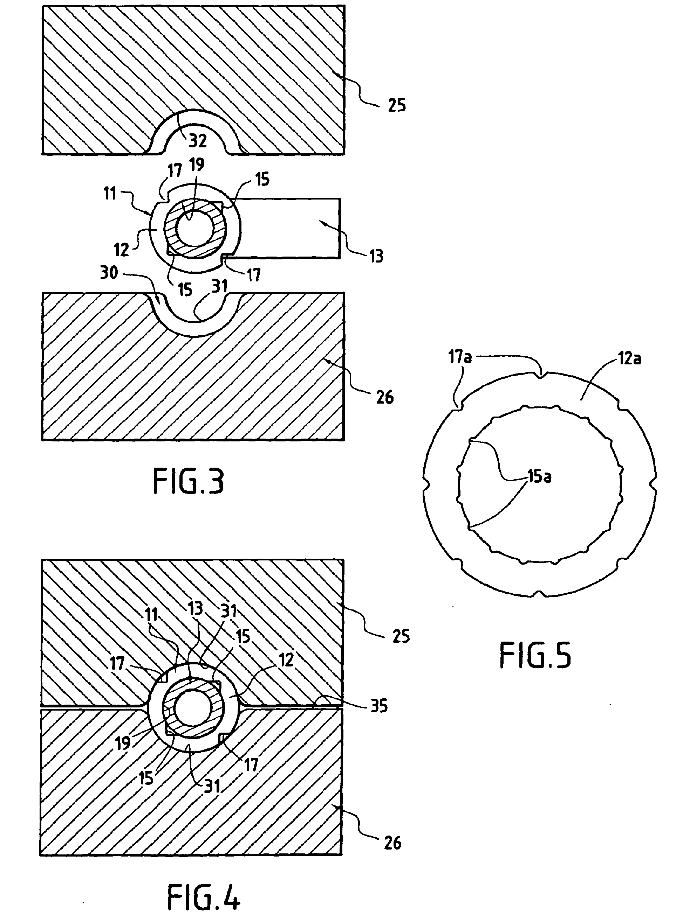

Sur la figure 5, on a représenté un autre mode de réalisation d'un anneau 12a destiné à former une bague d'arrêt, qui est remarquable principalement en ce que les encoches intérieures 15a sont plus petites que les encoches extérieures 17a.

Elles sont aussi en plus grand nombre.

De plus, comme précédemment, elles sont régulièrement réparties circonférentiellement.

Avantageusement, le volume total des encoches intérieures est sensiblement égal au volume total des encoches extérieures.

On a constaté que la profondeur des encoches intérieures 15a pouvait très avantageusement être voisine de 0,5 mm, éventuellement moins. En effet, après sertissage, lesdites encoches perdent de leur hauteur et le revêtement de la barre que l'on applique après sertissage par poudrage et cuisson est suffisamment épais pour couvrir intégralement la partie radialement la plus interne de la barre et "absorber" lesdites encoches, ce qui élimine de possibles points d'amorçage à la corrosion.

Selon une autre caractéristique avantageuse de ce mode de réalisation, le nombre d'encoches intérieures est le double du nombre d'encoches extérieures. Ainsi, pour une bague d'un diamètre intérieur de 21,8 mm et d'un diamètre extérieur de 31,8 mm destinée à un tube de 20,7 mm. On prévoit 16 encoches intérieures 15a et 8 encoches extérieures 17a. Les encoches intérieures et extérieures sont décalées circonférentiellement, comme représenté, deux encoches intérieures se trouvant dans le secteur angulaire défini entre deux encoches extérieures consécutives.

Pour le reste, on retrouve les mêmes caractéristiques que dans le mode de réalisation précédent, l'anneau 12a ayant une section radiale rectangulaire (en fait ici carrée de 5 mm de côté) en dehors des zones d'encoche. Les encoches s'étendent sur toute la dimension longitudinale de la bague. Elles ont un profil radial sensiblement triangulaire avec un fond présentant un congé. Les deux faces planes de chaque encoche définissent entre elles sensiblement un dièdre droit.

Un procédé de fabrication de la barre stabilisatrice, conforme à l'invention, comprend donc l'opération consistant à couder une barre cylindrique pour lui donner une forme voulue. Puis on lui fait subir une opération de trempe. Ensuite, on engage sur la barre une bague d'arrêt conforme à la description qui précède et on sertit chaque bague à un emplacement choisi sur une portion cylindrique de la barre.

Le dispositif de sertissage comprend les deux mâchoires 25, 26. Chaque mâchoire comporte une empreinte 30 comprenant une zone d'appui semi-cylindrique 31 de rayon faiblement supérieur au rayon extérieur de la barre et une gorge 32 de forme correspondant à celle de la bague, creusée au milieu de cette zone d'appui. Les deux mâchoires sont montées sur une presse pour pouvoir être serrées l'une contre l'autre jusqu'à déformation permanente de la bague. Celle-ci est positionnée à l'emplacement choisi de la barre et les deux mâchoires viennent la rétrécir à cet emplacement. Comme on le voit sur la figure 4 où les mâchoires sont au contact de la bague juste avant d'appliquer l'effort de sertissage, une épaisseur de quelques dixièmes de millimètres est retirée à chacune des faces d'appui 34, 35.

Comme représenté, la bague est de préférence indexée par rapport aux mâchoires. Les encoches se trouvent à 45° par rapport au plan des faces d'appui des mâchoires. La bague peut être en acier mais il est avantageux, pour des raisons de prix de revient et de facilité de réalisation, de la réaliser en alliage d'aluminium extrudé. Le tube extrudé, avec les encoches étant ensuite coupé en tronçons. L'alliage préconisé pour la réalisation de la bague porte la référence EN AW-6060 (suivant la norme EN 573-3 de 1994). Après extrusion, il subit un traitement thermique de façon à élever la limite élastique du matériau à une valeur d'environ 150 MPa.

## Revendications

1. Bague d'arrêt à sertir sur une barre stabilisatrice cylindrique coudée pour suspension de véhicule automobile, **caractérisée en ce qu'**elle comporte un anneau (12) fermé de diamètre intérieur (D) sensiblement supérieur au diamètre (d) de la barre sur laquelle il est destiné à être monté et **en ce que** ledit anneau comporte au moins une encoche intérieure (15) et au moins une encoche extérieure (17).

2. Bague selon la revendication 1, **caractérisée en ce que** ledit anneau (12) a une section radiale rectangulaire constante en dehors des zones d'encoche.

3. Bague selon la revendication 1 ou 2, **caractérisée en ce que** chaque encoche s'étend sur toute la dimension longitudinale (I) de la bague.

4. Bague selon l'une des revendications précédentes, **caractérisée en ce qu'**elle comporte deux encoches intérieures et deux encoches extérieures.

5. Bague selon la revendication 4, **caractérisée en ce que** les deux encoches extérieures, respectivement intérieures, sont diamétralement opposées.

6. Bague selon la revendication 5, **caractérisée en ce que** les encoches extérieures et intérieures sont décalées de 90°, circonférentiellement.

7. Bague selon l'une des revendications précédentes, **caractérisée en ce qu'**une telle encoche (15, 17) a une profondeur radiale comprise entre 1/3 et 2/3 de l'épaisseur de l'anneau.

8. Bague selon la revendication 7, **caractérisée en ce qu'**une telle encoche (15, 17) a une profondeur d'environ la moitié de l'épaisseur de l'anneau.

9. Bague selon l'une des revendications 1 à 3, **caractérisée en ce que** les encoches intérieures sont plus petites que les encoches extérieures.

10. Bague selon la revendication 9, **caractérisée en ce que** les encoches intérieures sont en plus grand nombre que les encoches extérieures, lesdites encoches intérieures et extérieures étant régulièrement réparties circonférentiellement.

11. Bague selon la revendication 9 ou 10, **caractérisée en ce que** le volume total des encoches intérieures est sensiblement égal au volume total des encoches extérieures.

12. Bague selon l'une des revendications 9 à 11, **caractérisée en ce que** la profondeur de chaque encoche intérieure est voisine de 0,5 mm.

13. Bague selon l'une des revendications 9 à 12, **caractérisée en ce que** le nombre d'encoches intérieures est le double du nombre d'encoches extérieures.

14. Bague selon l'une des revendications 9 à 13, **caractérisée en ce que** les encoches intérieures et extérieures sont décalées circonférentiellement.

15. Bague selon l'une des revendications précédentes, **caractérisée en ce qu'**une telle encoche (15, 17) a un profil radial sensiblement triangulaire.

16. Bague selon la revendication 15, **caractérisée en ce qu'**une telle encoche comporte deux faces planes définissant sensiblement entre elles un dièdre droit.

17. Bague selon la revendication 15 ou 16, **caractérisée en ce que** le fond de ladite encoche présente un congé.

18. Bague selon l'une des revendications précédentes, **caractérisée en ce que** le diamètre intérieur de l'anneau est de 8% à 15% supérieur au diamètre extérieur nominal de la barre sur laquelle il est destiné à être serti.

19. Bague selon l'une des revendications 1 à 17, **caractérisée en ce que** le diamètre intérieur d'anneau est compris entre 1,01 d + 0,2 mm et 1,05 d + 0,2 mm, d étant le diamètre extérieur de la barre.

20. Barre stabilisatrice coudée, **caractérisée en ce qu'**elle comporte une bague d'arrêt selon l'une des revendications précédentes, immobilisée à un emplacement choisi par sertissage.

21. Procédé de fabrication d'une barre stabilisatrice comprenant l'opération consistant à couder une barre cylindrique (13) pour lui donner une forme voulue, **caractérisé en ce que**, après avoir coudé la barre, on engage sur la barre une bague d'arrêt conforme à l'une des revendications 1 à 19, et **en ce qu'**on sertit cette bague à un emplacement choisi sur une portion cylindrique de ladite barre.

22. Procédé selon la revendication 21, **caractérisé en ce qu'**une opération de sertissage précitée consiste à placer la bague (11) audit emplacement choisi de la barre, à placer cette bague entre deux mâchoires (25, 26) comportant chacune une empreinte (30) comprenant une zone d'appui semi-cylindrique de rayon faiblement supérieur au rayon extérieur de la barre et une gorge de forme correspondant à celle de ladite bague, creusée dans cette zone d'appui et à serrer les mâchoires jusqu'à déformation permanente de ladite bague.

## Claims

1. A stop ring to be crimped on an offset cylindrical stabilising bar for automobile vehicle suspension, **characterised in that** it comprises a closed ring (12) of internal diameter (D) substantially greater than the diameter (d) of the bar on which it is intended to be mounted and **in that** said ring comprises at least one internal notch (15) and at least one external notch (17).

2. The ring according to claim 1, **characterised in that** said ring (12) has a constant rectangular radial section outside the notch zones.

3. The ring according to claim 1 or 2, **characterised in that** each notch extends over the entire longitudinal dimension (I) of the ring.

4. The ring according to any of the preceding claims, **characterised in that** it comprises two internal notches and two external notches.

5. The ring according to claim 4, **characterised in that** the two external notches, respectively internal, are diametrically opposed.

6. The ring according to claim 5, **characterised in that** the external and internal notches are offset by 90° circumferentially.

7. The ring according to any of the preceding claims, **characterised in that** such a notch (15, 17) has a radial depth of between 1/3 and 2/3 of the thickness of the ring.

8. The ring according to claim 7, **characterised in that** such a notch (15, 17) has a depth of about half the thickness of the ring.

9. The ring according to any of claims 1 to 3, **characterised in that** the internal notches are smaller than the external notches.

10. The ring according to claim 9, **characterised in that** the internal notches are greater in number than the external notches, said internal and external notches being regularly distributed circumferentially.

11. The ring according to claim 9 or 10, **characterised in that** the total volume of internal notches is substantially equal to the total volume of external notches.

12. The ring according to any of claims 9 to 11, **characterised in that** the depth of each internal notch is close to 0.5 mm.

13. The ring according to any of claims 9 to 12, **characterised in that** the number of internal notches is double the number of external notches.

14. The ring according to any of claims 9 to 13, **characterised in that** the internal and external notches are offset circumferentially.

15. The ring according to any of the preceding claims, **characterised in that** such a notch (15, 17) has a substantially triangular radial profile.

16. The ring according to claim 15, **characterised in that** such a notch comprises two plane faces defining substantially between them a straight dihedral.

17. The ring according to claim 15 or 16, **characterised in that** the bottom of said notch has a fillet.

18. The ring according to any of the preceding claims, **characterised in that** the internal diameter of the ring is from 8% to 15% greater than the nominal external diameter of the bar on which it is to be crimped.

19. The ring according to any of claims 1 to 17, **characterised in that** the internal ring diameter is between 1.01 d + 0.2 mm and 1.05 d + 0.2 mm, d being the external diameter of the bar.

20. An offset stabilising bar, **characterised in that** it comprises a stop ring according to any of the preceding claims, immobilised at a location selected by crimping.

21. A method for manufacturing a stabilising bar comprising an operation consisting of offsetting a cylindrical bar (13) to give it a desired form, **characterised in that** after the bar has been offset, a stop ring is placed on the bar according to any of claims 1 to 19, and **in that** this ring is crimped at a selected location on a cylindrical portion of said bar.

22. The method according to claim 21, **characterised in that** the above crimping operation consists of placing the ring (11) at said selected location of the bar, placing this ring between two jaws (25, 26) each comprising a contact area (30) comprising a semi-cylindrical support zone of a radius slightly greater than the external radius of the bar and a throat corresponding in shape to that of said ring, hollowed in this support zone and for clamping the jaws until said ring is permanently deformed.

## Patentansprüche

1. Stoppring zum Crimpen auf eine zylindrische, abgewinkelte Stabilisatorstange für eine Kraftfahrzeugaufhängung, **dadurch gekennzeichnet, daß** er einen geschlossenen Ring (12) mit Innendurchmesser (D) aufweist, der im wesentlichen größer ist als der Durchmesser (d) der Stange, auf der er montiert werden soll, und daß der Ring mindestens eine Innenkerbe (15) und mindestens eine Außenkerbe (17) aufweist.

2. Ring nach Anspruch 1, **dadurch gekennzeichnet, daß** der Ring (12) außerhalb der Kerbenzonen einen konstanten rechteckigen radialen Querschnitt hat.

3. Ring nach Anspruch 1 oder 2, **dadurch gekennzeichnet, daß** sich jede Kerbe auf dem ganzen Längsmaß (I) des Rings erstreckt.

4. Ring nach einem der vorhergehenden Ansprüche, **dadurch gekennzeichnet, daß** er zwei Innenkerben und zwei Außenkerben aufweist.

5. Ring nach Anspruch 4, **dadurch gekennzeichnet, daß** die jeweils zwei Außenkerben und Innenkerben einander diametral entgegengesetzt sind.

6. Ring nach Anspruch 5, **dadurch gekennzeichnet, daß** die Außenkerben und die Innenkerben umfänglich um 90° versetzt sind.

7. Ring nach einem der vorhergehenden Ansprüche, **dadurch gekennzeichnet, daß** eine solche Kerbe (15, 17) eine radiale Tiefe zwischen 1/3 und 2/3 der Stärke des Rings hat.

8. Ring nach Anspruch 7, **dadurch gekennzeichnet, daß** eine solche Kerbe (15, 17) eine Tiefe von etwa der Hälfte der Stärke des Rings hat.

9. Ring nach einem der Ansprüche 1 bis 3, **dadurch gekennzeichnet, daß** die Innenkerben kleiner sind als die Außenkerben.

10. Ring nach Anspruch 9, **dadurch gekennzeichnet, daß** die Innenkerben zahlreicher sind als die Außenkerben, wobei die Innenkerben und die Außenkerben regelmäßig auf dem Umfang verteilt sind.

11. Ring nach Anspruch 9 oder 10, **dadurch gekennzeichnet, daß** das Gesamtvolumen der Innenkerben im wesentlichen gleich dem Gesamtvolumen der Außenkerben liegt.

12. Ring nach einem der Ansprüche 9 bis 11, **dadurch gekennzeichnet, daß** die Tiefe jeder Innenkerbe nahe 0,5 mm ist.

13. Ring nach einem der Ansprüche 9 bis 12, **dadurch gekennzeichnet, daß** die Anzahl der Innenkerben doppelt so groß ist wie die Anzahl der Außenkerben.

14. Ring nach einem der Ansprüche 9 bis 13, **dadurch gekennzeichnet, daß** die Innenkerben und die Außenkerben umfänglich versetzt sind.

15. Ring nach einem der vorhergehenden Ansprüche, **dadurch gekennzeichnet, daß** eine solche Kerbe (15, 17) ein im wesentlichen dreieckiges radiales Profil hat.

16. Ring nach Anspruch 15, **dadurch gekennzeichnet, daß** eine solche Kerbe zwei ebene Seiten aufweist, die im wesentlichen untereinander eine rechtwinkelige V-Stellung definieren.

17. Ring nach Anspruch 15 oder 16, **dadurch gekennzeichnet, daß** der Grund der Kerbe eine Hohlkehle aufweist.

18. Ring nach einem der vorhergehenden Ansprüche, **dadurch gekennzeichnet, daß** der Innendurchmesser des Rings um 8 bis 15 % größer ist als der Nennaußendurchmesser der Stange, auf die er gefalzt werden soll.

19. Ring nach einem der Ansprüche 1 bis 17, **dadurch gekennzeichnet, daß** der Ringinnendurchmesser zwischen 1,01 d + 0,2 mm und 1,05 d + 0,2 mm liegt, wobei d der Außendurchmesser der Stange ist.

20. Abgewinkelte Stabilisatorstange, **dadurch gekennzeichnet, daß** sie einen Stoppring nach einem der vorhergehenden Ansprüche aufweist, der an einer ausgewählten Stelle durch Crimpen festgelegt wird.

21. Verfahren zum Herstellen einer Stabilisatorstange, das den Vorgang aufweist, der darin besteht, eine zylindrische Stange (13) abzuwinkeln, um ihr eine gewünschte Form zu verleihen, **dadurch gekennzeichnet, daß** man nach dem Abwinkeln der Stange auf der Stange einen Stoppring nach einem der Ansprüche 1 bis 19 aufbringt, und daß man diesen Ring an einer auf einem zylindrischen Abschnitt der Stange ausgewählten Stelle crimpt.

22. Verfahren nach Anspruch 21, **dadurch gekennzeichnet, daß** ein oben genannter Crimpvorgang darin besteht, den Ring (11) an der ausgewählten Stelle der Stange zu plazieren, diesen Ring zwischen Backen (25, 26) zu plazieren, die jeweils eine Vertiefung (30) aufweisen, die eine halbzylindrische Auflagezone mit Radius leicht größer als der Außenradius der Stange und eine Hohlkehle mit einer Form, die der des Rings entspricht und in diese Auflagezone gearbeitet ist, aufweist, und die Backen bis zum dauerhaften Verformen des Rings festzuziehen.
